# EUROPÄISCHE PATENTSCHRIFT

(11) **EP 1 980 444 B1**
(45) Veröffentlichungstag und Bekanntmachung des Hinweises auf die Patenterteilung: **14.05.2014**
(21) Anmeldenummer: 08004687.3
(22) Anmeldetag: 13.03.2008
(51) Int. Cl.: B60N 3/04

(54) **Befestigungsvorrichtung für Zusatzmatten in einem Kraftfahrzeug**
Fixing device for additional mats in a motor vehicle
Dispositif de fixation pour tapis complémentaires dans un véhicule automobile

(30) Priorität: 13.04.2007 DE 102007017886
(43) Veröffentlichungstag der Anmeldung: 15.10.2008
(73) Patentinhaber: Saxonia-Franke GmbH & Co, 73037 Göppingen (DE)
(72) Erfinder: Ausprung, Erich, 73312 Geislingen (DE)
(74) Vertreter: von Puttkamer, Nikolaus

(56) Entgegenhaltungen:
- DE-A1- 19 617 408
- KR-A- 20030 008 922
- US-A1- 2007 011 844

## Beschreibung

Die vorliegende Erfindung betrifft eine Befestigungsvorrichtung für Zusatzmatten in einem Kraftfahrzeug nach dem Oberbegriff des Patentanspruchs 1.

Aus der DE 196 17 408 C2 ist eine Befestigungseinrichtung für eine Zusatzmatte mit einem an einem Teppichboden eines Kraftfahrzeuges befestigbaren Basiselement bekannt. Das Basiselement weist ein über den Teppichboden hinausragendes Kopfteil auf, an dem ein an der Zusatzmatte befestigtes Aufsetzelement fixierbar ist, wobei das Aufsetzelement in einer Öffnung der Zusatzmatte angeordnet ist. Das Aufsetzelement weist zur Befestigung eine Einrastvorrichtung auf, die automatisch einrastet, wenn das Kopfteil des Basiselementes in das Aufsetzelement eingeschoben wird.

Das Basiselement weist ein Unterteil und ein Oberteil auf, wobei das Unterteil eine Grundplatte umfasst, an die ein Halteteil angeformt ist, das in eine Öffnung des Teppichbodens des Kraftfahrzeuges eingreift, wenn die Grundplatte an einer Seite des Teppichbodens anliegt. Das Oberteil besitzt ein Aufnahmeteil für das Halteteil und ein Tellerteil, das an der der Grundplatte abgewandten Seite des Teppichbodens aufliegt, wenn das Halteteil in das Aufnahmeteil eingreift. Ferner ist eine Verriegelungseinrichtung zur Verriegelung des Oberteils am Unterteil vorgesehen.

Aus dem Stand der Technik gemäß US 2007/011 844 A1 ist eine Befestigungsvorrichtung für eine Zusatzmatte bekannt, die ein an der der Zusatzmatte zugewandten Seite eines Teppichbodens anordenbares Oberteil und ein an der der Zusatzmatte abgewandten Seite des Teppichbodens anordenbares Unterteil umfasst. Das Unterteil ist an dem Oberteil derart montierbar, dass der Teppichboden zwischen dem Oberteil und dem Unterteil im Montagezustand fixiert ist. An dem Oberteil ist eine Zusatzmatte anbringbar. Das Unterteil weist die Form eines an seiner einen Seite mit einer Seite des Oberteils verbundenen und durch eine Aussparung des Teppichbodens verlaufenden Verriegelungsbügel auf. Das Oberteil weist an seiner anderen Seite wenigstens ein durch eine weitere, von der einen Aussparung in Längsrichtung beabstandete Aussparung verlaufendes Befestigungsteil auf, das an der anderen Seite des Verriegelungsbügels befestigbar ist. Dieser Stand der Technik offenbart nicht, ob die Zusatzmatte über ein an einem Oberteil befestigtes Aufsetzteil fixierbar ist.

Ferner wird der Stand der Technik aus der KR 2003 0008922 A gebildet. Diese Druckschrift zeigt eine alternative Befestigungsvorrichtung, deren Inhalt z.B. aus den Figuren 1 und 2 erkennbar ist.

Die Aufgabe der vorliegenden Erfindung besteht darin, eine Befestigungsvorrichtung zur zuverlässigen Befestigung einer Zusatzmatte am Teppichboden eines Kraftfahrzeuges zu schaffen, die gegen Verschiebungen in Bezug auf den Teppichboden des Kraftfahrzeuges gesichert an diesem befestigbar ist.

Diese Aufgabe wird durch eine Befestigungsvorrichtung mit den Merkmalen des Patentanspruches 1 gelöst.

Der wesentliche Vorteil der vorliegenden Erfindung besteht darin, dass ein plattenförmiges Oberteil der vorliegenden Befestigungsvorrichtung besonders zuverlässig und gegen Verschiebungen in alle Richtungen geschützt am Teppichboden eines Kraftfahrzeuges befestigbar ist. Dabei ist vorteilhafterweise dafür Sorge getragen, dass ein Ausbrechen eines am plattenförmigen Oberteil angespritzten Teilbereiches, der über den Teppichboden in Richtung auf die Zusatzmatte hinausragt, zuverlässig vermieden wird, weil in der Übergangszone zwischen dem Teilbereich und dem Oberteil spritztechnisch gesehen ein Übergang zwischen einem massiven, vollzylinderförmigen Teilbereich und dem relativ dünnen Oberteil vermieden ist.

Vorteilhafte Ausgestaltungen der Erfindung gehen aus den Unteransprüchen hervor.

Im folgenden werden die Erfindung und deren Ausgestaltungen im Zusammenhang mit den Figuren näher erläutert. Es zeigen:
Figur 1 zum Teil im Schnitt eine Seitenansicht der vorliegenden Befestigungsvorrichtung;
Figur 2 einen Schnitt durch die Befestigungsvorrichtung der Figur 1 entlang der Linie 11-11; und
Figur 3 eine Ansicht auf einen Teilbereich der vorliegenden Befestigungseinrichtung entlang der Linie III-III der Figur 1.

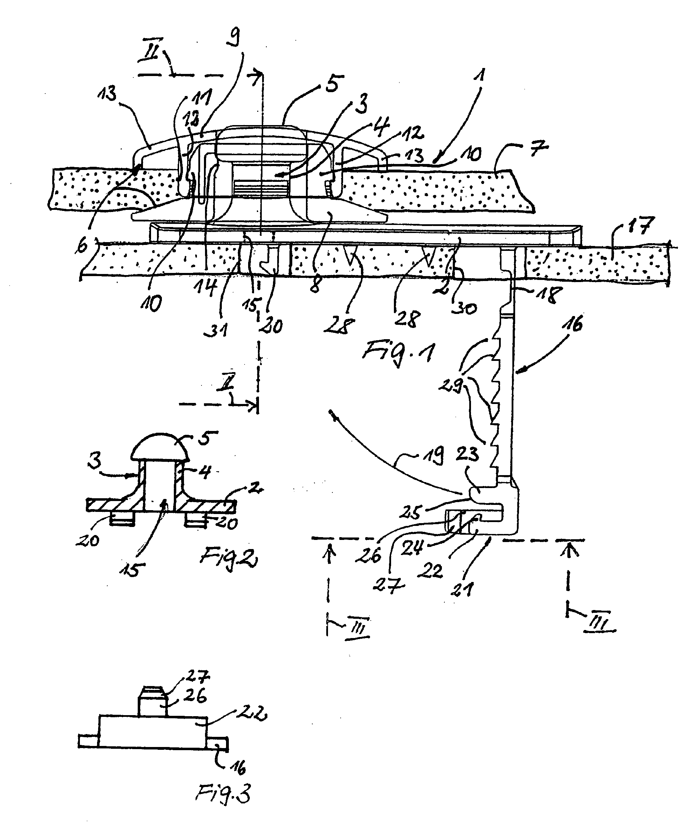

Gemäß Figur 1 umfasst die vorliegende Befestigungsvorrichtung 1 im Wesentlichen ein plattenförmiges Oberteil 2, an das ein Teilbereich, vorzugsweise in der Form eines pilzförmiges Kopfteiles 3 angeformt ist, das im Wesentlichen aus einem hohlen Schaftteil 4 und einem über dasselbe an dem dem Oberteil 2 abgewandten Endbereich nach außen vorstehenden Kopfbereich 5 besteht. An dem Kopfteil 3 ist in der aus der Figur 1 ersichtlichen Weise ein Aufsetzteil 6 befestigbar, das in einer Ausnehmung einer Fuß- bzw. Zusatzmatte 7 befestigt ist und im Wesentlichen aus einem unteren ringförmigen Plattenteil 8 sowie einen oberen Kappenteil 9 besteht. Das ringförmige Plattenteil 8 weist an seiner dem Oberteil 2 abgewandten Seite einen ringförmigen Vorsprungbereich 10 auf, der in die Aussparung 11 der Fußmatte 7 hineinragt und an dem ein ringförmiger Vorsprung 12 des Kappenteiles 9, der ebenfalls in die Aussparung 11 der Zusatzmatte 7 eingreift, verriegelbar ist, wenn das Kappenteil 9 zur Befestigung der Fußmatte 7 zwischen dem Plattenteil 8 und dem Kappenteil 9 in Richtung auf das Plattenteil 8 bewegt wird. Das Kappenteil 9 liegt dann mit einem radial über den ringförmigen Vorsprung 12 hinaus ragenden Fixierbereich 13 fest an der dem Basiselement 2 abgewandten Seite der Zusatzmatte 7 an.

Das Aufsetzteil 6 ist in an sich bekannter Weise dadurch an dem Kopfteil 3 befestigbar, das ein Verriegelungsbereich 14 des Aufsetzteiles 6 den Kopfbereich 5 des Kopfteiles 3 im Montagezustand verriegelt hintergreift.

Erfindungsgemäß weist das Oberteil 2 die Form einer größeren, vorzugsweise etwa rechteckig ausgestalteten Platte auf, die mittig unterhalb des an sie angeformten Schaftteiles 4 eine Zentrieraussparung 15 aufweist, deren Funktion später näher erläutert werden wird.

Vorzugsweise sind das Kopfteil 3 bzw. das Schaftteil 4 und die Zentrieraussparung 15 an einer Seite des plattenförmigen Oberteiles 2 angeordnet, während in Längsrichtung an der dem Kopfteil 3 abgewandten Seite ein ein Unterteil bildender Verriegelungsbügel 16 angeformt ist. Der Verriegelungsbügel 16 dient dazu, den Teppichboden 17 oder dergleichen eines Kraftfahrzeuges zwischen sich und dem Oberteil 2 zu fixieren. Zu diesem Zweck besitzt der vorzugsweise plattenförmig und insbesondere rechteckig ausgebildete Verriegelungsbügel 16 an seiner dem Oberteil 2 zugewandten Seite einen vorzugsweise als Filmscharnier durch eine bereichsweise Schwächung im Material des Verriegelungsbügels 16 ausgebildeten Schwenkbereich 18, um den der Verriegelungsbügel 16 zur Befestigung des Oberteiles 2 am Teppichboden 17 in Richtung des Pfeils 19 derart verschwenkbar ist, dass der Verriegelungsbügel 16 etwa parallel zum Oberteil 2 ausgerichtet ist und der Teppichboden 17 zwischen den Oberteil 2 und dem Verriegelungsbügel 16 festgehalten wird. Der Schwenkbereich 18 verläuft vorzugsweise unter einem Winkel von etwa 90° zur Ebene des Basiselementes 2.

Zur Befestigung des Verriegelungsbügels 16 an dem Oberteil 2 in dem zuvor genannten Montagezustand weist das Oberteil 2 vorzugsweise in Querrichtung gesehen an jeder Seite der Zentrieraussparung 15 ein zu der dem Kopfteil 3 abgewandten Seite vorstehendes Hakenteil 20 auf, das in einem am freien Endbereich des Verriegelungsbügels 16 verlaufenden Verriegelungselement 21 verriegelbar ist. Vorzugsweise besitzt das Verriegelungselement 21 zwei voneinander insbesondere in Längsrichtung beabstandete, parallel verlaufende und zur Seite der Hakenteile 20 vorstehende, insbesondere in Querrichtung verlaufende Wandteile 22, 23, wobei das eine Wandteil 22 ein das Hakenteil 20 im Montagezustand verriegelnd hintergreifendes Hakenelement 24 besitzt und das andere Wandteil 23 eine als Auffahrschräge 25 für das Hakenteil 20 dienende Schräge oder Abrundung aufweist. Wenn daher der Verriegelungsbügel 16 in Richtung des Pfeils 19 auf das Oberteil 2 zu bewegt wird, gelangt kurz vor Erreichen des Montagezustandes, in dem der Verriegelungsbügel 16 parallel zum Oberteil 2 ausgerichtet ist, die Auffahrschräge 25 in Anlage an dem Hakenteil 20, wobei die Wandteile 22 und 23 federnd aufgespreizt werden, bis schließlich das Hakenelement 24 die Hakenteile 20 verriegelnd hintergreift.

Ein wesentliches Merkmal der vorliegenden Erfindung besteht darin, dass an einem Wandteil 22 des Verriegelungselementes 21 ein Verriegelungszapfen 26 angeformt ist, der im genannten Verriegelungszustand in die Zentrieraussparung 15 des Oberteiles 2 eingreift, wobei der Außenumfang des Verriegelungszapfens 26 so bemessen ist, dass er wenigstens teilweise (vorzugsweise jedoch ganz) dicht an der Innenwandung der Zentrieraussparung 15 derart anliegt, dass sichergestellt wird, im Verriegelungszustand Relativbewegungen zwischen dem Verriegelungsbügel 16 und dem Oberteil 2 in alle möglichen Richtungen vermieden werden. Solche Relativbewegungen könnten dazu führen, dass sich der Verriegelungsbügel 16 vom Oberteil 2 löst und dass sich daher die Zusatzmatte 7 vom Teppichboden 17 trennen könnte. Insbesondere könnten die genannten Relativbewegungen dazu führen, dass das Material im Schwenkbereich 18 des Verriegelungsbügels 16 ermüdet.

Damit der Verriegelungszapfen 26 einfach und leichgängig in die Aussparung 15 eingeführt werden kann, weist er vorzugsweise an seinem freien Ende eine Abschrägung bzw. Einfahrschräge 27 auf.

Zur weiteren Festlegung des Oberteiles 2 im Montagezustand am Teppichboden 7 weist das Oberteil 2 vorzugsweise an seiner dem Verrieglungsbügel 16 zugewandten Seite spitze Dornteile 28 auf, die in den Teppichboden 17 eindringen. Entsprechende, in den Teppichboden 17 im Montagezustand eindringende Verriegelungsrippen 29 sind vorzugsweise an der dem Oberteil 2 zugewandten Seite des Verriegelungsbügels 16 angeordnet.

Es wurde bereits darauf hingewiesen, dass die Zentrieraussparung 15 in den Hohlraum des hohlzylindrischen Schaftteiles 4 übergeht, so dass in diesem Übergangsbereich ein spritztechnisch problematischer Übergang zwischen einem massiven Schaftteil und dem relativ dünnen Oberteil 2 vermieden wird. In einem solchen Übergangsbereich könnten während der Lebensdauer der Befestigungsvorrichtung Brüche auftreten, die zum Lösen der Zusatzmatte 7 von dem Teppichboden 17 führen könnten. Solche Brüche werden bei dem vorliegenden Übergang vermieden.

Im Teppichboden 17 sind zum Anbringen der Befestigungsvorrichtung eine Aussparung 30 zum Hindurchführen des Verriegelungsbügels 16 und eine davon in Längsrichtung beabstandete Aussparung 31 angeordnet, in die das Verriegelungselement 21 und die Hakenteile 20 eingreifen. Der Teppichbodenbereich, der zwischen den Aussparungen 30 und 31 liegt, wird also im Montagezustand zwischen dem Oberteil 2 und dem Verriegelungsteil 16 festgehalten.

Vorzugsweise handelt es sich bei der vorliegenden Befestigungsvorrichtung um ein einziges durch Spritzgießen hergestelltes Kunststoffteil.

## Patentansprüche

1. Befestigungsvorrichtung für eine Zusatzmatte, insbesondere in einem Kraftfahrzeug, mit einem an der der Zusatzmatte (7) zugewandten Seite eines Teppichbodens (17) anordenbaren Oberteil (2) und einem an der der Zusatzmatte abgewandten Seite des Teppichbodens (17) anordenbaren Unterteil, das an dem Oberteil (2) derart montierbar ist, dass der Teppichboden (17) zwischen dem Oberteil (2) und dem Unterteil im Montagezustand fixiert ist, wobei an dem Oberteil (2) ein an der Zusatzmatte (7) befestigtes Aufsetzteil (6) fixierbar ist, das Unterteil die Form eines an seiner einen Seite mit einer Seite des Oberteils (2) verbundenen und durch eine Aussparung (30) des Teppichbodens (17) verlaufenden Verriegelungsbügels (16) aufweist, wobei das Oberteil (2) an seiner anderen Seite wenigstens ein durch eine weitere, von der einen Aussparung (30) in Längsrichtung beabstandete Aussparung (31) verlaufendes Befestigungsteil (20) aufweist, das an der anderen Seite des Verriegelungsbügels (16) befestigbar ist, und wobei seitlich neben dem Befestigungsteil (20) wenigstens ein Zentrierelement angeordnet ist, und wobei das Befestigungsteil (20), durch die weitere Aussparung (31) hindurch mit einem weiteren Verriegelungselement (21) des Verriegelungsbügels (16) zusammenwirkt, **dadurch gekennzeichnet, dass** das Zentrierelement die Form einer Zentrieraussparung (15) aufweist, in die im Montagezustand ein Verriegelungszapfen (26) des Verriegelungsbügels (16) derart eingreift, dass sein Außenumfang zur Vermeidung von Relativbewegungen zwischen der Zentrieraussparung (15) und dem Verriegelungszapfen (26) zumindest teilweise dicht an der Innenwandung der Zentrieraussparung (15) anliegt, und dass an die der Zusatzmatte (7) zugewandte Seite des Oberteils (2) ein an dem Aufsetzteil (6) fixierbares hohles Schaftteil (4) angeformt ist, dessen Hohlraum in die Zentrieraussparung (15) übergeht.

2. Vorrichtung nach Anspruch 1, **dadurch gekennzeichnet, dass** der Verriegelungszapfen (26) entlang seines gesamten Umfanges dicht an der Innenwandung der Zentrieraussparung(15) anliegt.

3. Vorrichtung nach Anspruch 2, **dadurch gekennzeichnet, dass** der Verriegelungszapfen (26) an seinem freien Ende eine Einfahrschräge (27) aufweist.

4. Vorrichtung nach einem der Ansprüche 1 bis 3, **dadurch gekennzeichnet, dass**, vorzugsweise in Querrichtung gesehen an jeder der zwei Seiten der Zentrieraussparung (15) ein Hakenteil (20) vorgesehen ist, wobei jedes Hakenteil (20) an einem weiteren Hakenelement (24) des einen Wandteiles (22) angreift.

5. Vorrichtung nach einem der Ansprüche 1 bis 4, **dadurch gekennzeichnet, dass** sich die Zentrieraussparung (15) mittig zwischen den Hakenteilen (20) befindet.

6. Vorrichtung nach einem der Ansprüche 1 bis 5, **dadurch gekennzeichnet, dass** der Verriegelungszapfen (26) an das eine Wandteil (22) angeformt ist.

7. Vorrichtung nach Anspruch 6, **dadurch gekennzeichnet, dass** der Querschnitt des Hohlraumes des Schaftteiles (4) ebenso bemessen ist, wie derjenige der Zentrieraussparung (15).

8. Vorrichtung nach Anspruch 6 oder 7, **dadurch gekennzeichnet, dass** das Schaftteil (4) die Form eines hohlen Kreiszylinders und die Zentrieraussparung (15) die Form eines kreisrunden Loches aufweisen.

9. Vorrichtung nach einem der Ansprüche 6 bis 8, **dadurch gekennzeichnet, dass** an dem freien Ende des Schaftteiles (4) ein am Aufsetzteil (6) befestigbarer Kopfbereich (5) angeordnet ist, der über den Außenumfang des Schaftteiles (4) vorsteht.

10. Vorrichtung nach einem der Ansprüche 1 bis 9, **dadurch gekennzeichnet, dass** das Oberteil (2) und/oder der Verriegelungsbügel (16) plattenförmig ausgebildet sind.

11. Vorrichtung nach einem der Ansprüche 1 bis 10, **dadurch gekennzeichnet, dass** der Verriegelungsbügel (16) in Querrichtung verlaufende, voneinander beabstandete, im Montagezustand in den Teppichboden (17) eingreifende Verriegelungsrippen (29) aufweist.

12. Vorrichtung nach einem der Ansprüche 1 bis 11, **dadurch gekennzeichnet, dass** das Oberteil (2) im Montagezustand in den Teppichboden (17) eingreifende Dornteile (28) aufweist.

13. Vorrichtung nach einem der Ansprüche 1 bis 12, **dadurch gekennzeichnet, dass** das Oberteil (2) mit der Zentrieraussparung (15), dem Hakenteil oder den Hakenteilen (20) und gegebenenfalls den Dornteilen (28) und der mit dem Oberteil verbundene Verriegelungsbügel (16) mit dem Verriegelungszapfen (26), den Wandteilen (22, 23) und gegebenenfalls den Verriegelungsrippen (29) die Form eines Spritzgussteiles besitzen.

14. Vorrichtung nach einem der Ansprüche 1 bis 13, **dadurch gekennzeichnet, dass** die einen Seiten des Oberteiles (2) und des Verriegelungsbügels (16) über einen Schwenkbereich (18) in der Form einer Schwächungsstelle, vorzugsweise eines Filmscharniers, miteinander verbunden sind.

15. Vorrichtung nach Anspruch 1 bis 14, **dadurch gekennzeichnet, dass** das Befestigungsteil die Form wenigstens eines an dem Oberteil (2) angeordneten, die weitere Aussparung (31) durchgreifenden Hakenteiles (20) besitzt, das an dem weiteren Verriegelungselement (21) verriegelbar ist.

16. Vorrichtung nach Anspruch 15, **dadurch gekennzeichnet, dass** das Befestigungsteil zwei in Querrichtung an dem Oberteil (2) voneinander beabstandete Hakenteile (20) umfasst.

17. Vorrichtung nach Anspruch 15 oder 16, **dadurch gekennzeichnet, dass** das weitere Verriegelungselement zwei zur Seite des Hakenteiles (20) vorstehende, voneinander in Längsrichtung beabstandete Wandteile (22, 23) aufweist und dass das eine Wandteil (22) ein am Hakenteil (20) im Montagezustand verriegelnd angreifendes Hakenelement (24) besitzt.

18. Vorrichtung nach Anspruch 17, **dadurch gekennzeichnet, dass** das andere Wandteil (23) eine Auffahrschräge (25) für das zwischen die Wandteile (22, 23) einführbare Hakenteil (20) in der Form einer Schräge oder Abrundung aufweist.

## Claims

1. A fastening device for an additional mat, in particular in a motor vehicle, having an upper part (2), which can be arranged on the side of a carpet (17) facing the additional mat (7), and a bottom part, which can be arranged on the side of the carpet (17) facing away from the additional mat (7) and which can be mounted on the upper part (2) such that the carpet (17) is fixed between the bottom part and the upper part (2) in the assembled state, wherein an attachment part (6) fastened to the additional mat (7) can be fixed to the upper part (2), the bottom part has the shape of a locking clamp (16) connected on one side to one side of the upper part (2) and running through a recess (30) of the carpet (17), wherein the upper part (2) has on its other side at least one mounting part (20) running through a further recess (31) spaced apart from the one recess (30) in the longitudinal direction, which can be fastened to the other side of the locking clamp (16), and wherein at least one centring element is arranged laterally next to the mounting part (20), and wherein the mounting part (20) interacts through the further recess (31) with a further locking element (21) of the locking clamp (16), **characterized in that** the centring element has the shape of a centring recess (15), with which a twistlock (26) of the locking clamp (16) engages in the assembled state such that its outer circumference fits at least partially closely on the inner wall of the centring recess (15) in order to avoid relative movements between the centring device (15) and the twistlock (26), and that a hollow shank part (4), which can be fixed to the attachment part (6) and the cavity of which merges into the centring recess (15), is integrally moulded onto the side of the upper part (2) facing the additional mat (7).

2. A device according to claim 1, **characterized in that**, along its entire circumference, the twistlock (26) fits closely on the inner wall of the centring recess (15).

3. A device according to claim 2, **characterized in that** the twistlock (26) has a lead-in chamfer (27) at its free end.

4. A device according to one of claims 1 to 3, **characterized in that**, preferably when viewed in the transverse direction, a hook part (20) is provided on each of the two sides of the centring recess (15), wherein each hook part (20) engages with a further hook element (24) of the one wall part (22).

5. A device according to one of claims 1 to 4, **characterized in that** the centring recess (15) is centrally arranged between the hook parts (20).

6. A device according to one of claims 1 to 5, **characterized in that** the twistlock (26) is integrally moulded onto the one wall part (22).

7. A device according to claim 6, **characterized in that** the cross section of the cavity of the shank part (4) has the same dimensions as the centring recess (15).

8. A device according to claim 6 or 7, **characterized in that** the shank part (4) has the shape of a hollow circular cylinder and the centring recess (15) has the shape of a circular hole.

9. A device according to one of claims 6 to 8, **characterized in that** a head region (5), which can be fastened to the attachment part (6) and which protrudes beyond the outer circumference of the shank part (4), is arranged at the free end of the shank part (4).

10. A device according to one of claims 1 to 9, **characterized in that** the upper part (2) and/or the locking clamp (16) have a plate-shaped design.

11. A device according to one of claims 1 to 10, **characterized in that** the locking clamp (16) has locking serrations (29) running in the transverse direction, being spaced apart from each other and engaging with the carpet (17) in the assembled state.

12. A device according to one of claims 1 to 11, **characterized in that** the upper part (2) has spike parts (28) engaging with the carpet (17) in the assembled state.

13. A device according to one of claims 1 to 12, **characterized in that** the upper part (2) including the centring recess (15), the hook part or the hook parts (20) and, where required, the spike parts (28) and the locking clamp (16) with the twistlock (26) connected to the upper part, the wall parts (22, 23) and, where required, the locking serrations (29) have the shape of an injection moulded part.

14. A device according to claims 1 to 13, **characterized in that** the one sides of the upper part (2) and the locking clamp (16) are connected to each other via a swivelling portion (18) in the form of a weakened portion, preferably a film hinge.

15. A device according to claims 1 to 14, **characterized in that** the mounting part has the shape of at least one hook part (20) arranged on the upper part (2) and passing through the further recess (31), which is capable of being locked on the further locking element (21).

16. A device according to claim 15, **characterized in that** the mounting part comprises two hook parts (20) spaced apart from each other on the upper part (2) in the transverse direction.

17. A device according to claim 15 or 16, **characterized in that** the further locking element has two wall parts (22, 23) protruding sideways from the hook element (20) and being spaced apart from each other in the longitudinal direction, and that the one wall part (22) has a hook element (24) engaging with the hook part (20) in a locking manner in the assembled state.

18. A device according to claim 17, **characterized in that** the other wall part (23) has a lead-in chamfer (25) for the hook part (20) insertable between the wall parts (22, 23) in the shape of a bevel or a curve.

## Revendications

1. Dispositif de fixation pour un tapis complémentaire, en particulier dans un véhicule automobile, comportant une partie supérieure (2) qui peut être agencée sur la face d'une moquette (17), qui est tournée vers le tapis complémentaire (7) et une partie inférieure qui peut être agencée sur la face de la moquette (17), qui est détournée du tapis complémentaire (7), laquelle peut être montée avec la partie supérieure de telle sorte que la moquette (17) est fixée entre la partie supérieure (2) et la partie inférieure à l'état de montage, une pièce de pose (6) fixée sur le tapis complémentaire (7) pouvant être fixée sur la partie supérieure (2), la partie inférieure présentant la forme d'un étrier de verrouillage (16) relié sur une de ses faces avec une face de la partie supérieure (2) et s'étendant à travers un évidement (30) de la moquette (17), la partie supérieure (2) présentant sur son autre face au moins une pièce de fixation (20) s'étendant à travers un autre évidement (31) espacé dudit évidement (30) en direction longitudinale, laquelle peut être fixée sur l'autre face de l'étrier de verrouillage (16), et au moins un élément de centrage étant agencé latéralement à côté de la pièce de fixation (20), et la pièce de fixation (20) coopérant à travers l'autre évidement (31) avec un autre élément de verrouillage (21) de l'étrier de verrouillage (16), **caractérisé en ce que** l'élément de centrage présente la forme d'un évidement de centrage (15) dans lequel une goupille de verrouillage (26) de l'étrier de verrouillage (16) s'engage, à l'état de montage, de telle sorte que sa périphérie extérieure repose au moins partiellement tout près de la paroi intérieure de l'évidement de centrage (16) pour éviter des mouvements relatifs entre l'évidement de centrage (15) et la goupille de verrouillage (26), et **en ce que** sur la face de la partie supérieure (2), qui est tournée vers le tapis complémentaire (7), est formée une tige (4) creuse qui peut être fixée sur la pièce de pose (6) et dont la cavité se prolonge dans l'évidement de centrage (15).

2. Dispositif selon la revendication 1, **caractérisé en ce que** la goupille de verrouillage (26) repose le long de toute sa périphérie très près de la paroi intérieure de l'évidement de centrage (15).

3. Dispositif selon la revendication 2, **caractérisé en ce que** la goupille de verrouillage (26) présente une pente d'introduction (27) à son extrémité libre.

4. Dispositif selon l'une des revendications 1 à 3, **caractérisé en ce que**, vu de préférence en direction transversale sur chacun des deux côtés de l'évidement de centrage (15), est prévue une pièce en forme de crochet (20), chaque pièce en forme de crochet (20) s'engageant sur un autre élément en forme de crochet (24) de ladite une partie de paroi (22).

5. Dispositif selon l'une des revendications 1 à 4, **caractérisé en ce que** l'évidement de centrage (15) se trouve au milieu entre les pièces en forme de crochet (20).

6. Dispositif selon l'une des revendications 1 à 5, **caractérisé en ce que** la goupille de verrouillage (26) est formée sur ladite une partie de paroi (22).

7. Dispositif selon la revendication 6, **caractérisé en ce que** la section transversale de la cavité de la tige (4) a les mêmes dimensions que celle de l'évidement de centrage (15).

8. Dispositif selon la revendication 6 ou 7, **caractérisé en ce que** la tige (4) a la forme d'un cylindre circulaire creux et l'évidement de centrage (15) a la forme d'un trou circulaire.

9. Dispositif selon l'une des revendications 6 à 8, **caractérisé en ce que** à l'extrémité libre de la tige (4) est agencée une zone de tête (5) qui peut être fixée sur la pièce de pose (6) et qui fait saillie sur la périphérie extérieure de la tige (4).

10. Dispositif selon l'une des revendications 1 à 9, **caractérisé en ce que** la partie supérieure (2) et/ou l'étrier de verrouillage (16) sont réalisés en forme de plaques.

11. Dispositif selon l'une des revendications 1 à 10, **caractérisé en ce que** l'étrier de verrouillage (16) présente des nervures de verrouillage (29) espacées les unes des autres, s'étendant en direction transversale et s'engageant dans la moquette (17) à l'état de montage.

12. Dispositif selon l'une des revendications 1 à 11, **caractérisé en ce que** la partie supérieure (2) présente à l'état de montage des parties en forme d'épines (28) qui s'engagent dans la moquette (17).

13. Dispositif selon l'une des revendications 1 à 12, **caractérisé en ce que** la partie supérieure (2) avec l'évidement de centrage (15), avec la ou les pièces en forme de crochet (20) et éventuellement avec les parties en forme d'épines (28), et l'étrier de verrouillage (16) relié avec la partie supérieure, avec les parties de paroi (22, 23) et éventuellement avec les nervures de verrouillage (29) possèdent la forme d'une pièce moulée par injection.

14. Dispositif selon l'une des revendications 1 à 13, **caractérisé en ce que** l'une des faces de la partie supérieure (2) et de l'étrier de verrouillage (16) sont reliées l'une à l'autre par l'intermédiaire d'une zone de pivotement (18) sous la forme d'une zone d'affaiblissement, de préférence d'une charnière-film.

15. Dispositif selon l'une des revendications 1 à 14, **caractérisé en ce que** la pièce de fixation possède la forme d'au moins une pièce en forme de crochet (20) agencée sur la partie supérieure (2) et traversant l'autre évidement (31), laquelle peut être verrouillée sur l'autre élément de verrouillage (21).

16. Dispositif selon la revendication 15, **caractérisé en ce que** la pièce de fixation comprend deux pièces en forme de crochets (20) espacées l'une de l'autre sur la partie supérieure (2) en direction transversale.

17. Dispositif selon la revendication 15 ou 16, **caractérisé en ce que** l'autre élément de verrouillage présente deux parties de paroi (22, 23) espacées l'une de l'autre en direction longitudinale et faisant saillie sur le côté de la pièce en forme de crochet (20) et **en ce que** ladite une partie de paroi (22) possède un élément en forme de crochet (24) qui, à l'état de montage, s'engage par verrouillage sur la pièce en forme de crochet (20).

18. Dispositif selon la revendication 17, **caractérisé en ce que** l'autre partie de paroi (23) présente une pente d'introduction (25) sous la forme d'un chanfrein ou d'un arrondi, pour la pièce en forme de crochet (20) susceptible d'être introduite entre les parties de paroi (22, 23).
